# EUROPEAN PATENT APPLICATION

(11) **EP 4 024 372 A1**
(43) Date of publication of application: **06.07.2022**
(21) Application number: 20859254.3
(22) Date of filing: 28.08.2020
(51) Int. Cl.: G09C 5/00, H04L 9/32

(54) **INFORMATION PROCESSING DEVICE, INFORMATION PROCESSING METHOD, AND PROGRAM**

(30) Priority: 28.08.2019 US 201962892857 P
(71) Applicant: Sony Semiconductor Solutions Corporation, Atsugi-shi Kanagawa 243-0014 (JP)
(72) Inventor: NAKAMA, Shingo, Atsugi-shi, Kanagawa 243-0014 (JP); HIBINO, Tomokazu, Atsugi-shi, Kanagawa 243-0014 (JP)
(74) Representative: Müller Hoffmann & Partner
(86) International application number: PCT/JP2020/032557
(87) International publication number: WO 2021/039953

(57) **Abstract**

The present disclosure relates to an information processing device, an information processing method, and a program that make it possible to ensure authenticity of an image or the like.

In a verification unit, an image is captured by performing photoelectric conversion, an electronic signature is verified of the image output from an imaging element that outputs the image together with the electronic signature of the image, and the image is output in a case where verification of the electronic signature of the image is successful. Moreover, in the verification unit, the image is processed, an electronic signature is verified of a result of processing the image output from a processing unit that outputs a result of processing the image together with an electronic signature of the result of processing the image, and the result of processing the image is output in a case where verification of the electronic signature of the result of processing the image is successful. The present technology can be applied to, for example, an imaging device that captures an image.

## Description

### TECHNICAL FIELD

The present disclosure relates to an information processing device, an information processing method, and a program that prove reality of an image captured by a terminal or the like of a user and that the image has not been altered.

### BACKGROUND ART

In recent years, there is a technology in which captured data is assumed to be used as evidence material and electronic signature is applied to captured image data to secure reliability thereof (for example, Patent Document 1).

### CITATION LIST

### PATENT DOCUMENT

Patent Document 1: Japanese Patent Application Laid-Open No. 2007-081596

### SUMMARY OF THE INVENTION

### PROBLEMS TO BE SOLVED BY THE INVENTION

In such authenticity proof of image data, it is desired to be more secure, and further improvement in reliability is expected.

The present technology has been made in view of such a situation, and it is intended to make it possible to ensure authenticity of an image or the like.

### SOLUTIONS TO PROBLEMS

A first information processing device or program of the present technology is an information processing device including a verification unit that performs: verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful, or a program for causing a computer to function as such an information processing device.

A first information processing method of the present technology is an information processing method including: verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.

In the first information processing device, information processing method, and program of the present technology, the electronic signature is verified of the image information output from the imaging element that captures the image by performing photoelectric conversion and outputs the image or the image information that is the result of processing the image together with the electronic signature of the image information. In the case where the verification of the electronic signature of the image information is successful, the image information is output. Furthermore, the electronic signature is verified of the result of processing the image information output from the processing unit that processes the image information and outputs the result of processing the image information together with the electronic signature of the result of processing the image information. In the case where the verification of the electronic signature of the result of processing the image information is successful, the result of processing the image information is output.

A second information processing device or program of the present technology is an information processing device including a verification unit: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful, or a program for causing a computer to function as such an information processing device.

A second information processing method of the present technology is an information processing method including: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.

In the second information processing device, information processing method, and program of the present technology, the electronic signature is verified of image information or the result of processing the image information after the authentication in which the image information or the result of processing the image information is authenticated, the image information or the result of processing the image information being output from the imaging element that captures the image by performing photoelectric conversion and outputs the image or the image information that is the result of processing the image together with the electronic signature of the image information. In the case where the verification of the electronic signature is successful, the image information or the result of processing the image information is output.

Note that, the first information processing device and the second information processing device may be an independent device or an internal block included in one device.

Furthermore, the first program and the second program can be provided by being transmitted via a transmission medium or by being recorded on a recording medium.

### BRIEF DESCRIPTION OF DRAWINGS

Fig. 1 is a block diagram of an authentication system according to a first embodiment of the present disclosure.
Fig. 2 is a block diagram of an authentication system according to a second embodiment of the present disclosure.
Fig. 3 is a diagram explaining configuration examples of an imaging element 101, an image processing unit 102, and an encoder 103, and functions of a first verification unit 110.
Fig. 4 is a block diagram illustrating a configuration example of a third embodiment of an authentication system to which the present technology is applied.
Fig. 5 is a block diagram illustrating a configuration example of a fourth embodiment of the authentication system to which the present technology is applied.
Fig. 6 is a diagram explaining configuration examples of a decoder 201 and a machine learning unit 202 and functions of a second verification unit 210.
Fig. 7 is a block diagram illustrating a configuration example of a fifth embodiment of the authentication system to which the present technology is applied.
Fig. 8 is a diagram explaining a first example of image recognition performed by the imaging element 101.
Fig. 9 is a diagram explaining a second example of image recognition performed by the imaging element 101.
Fig. 10 is a diagram explaining a second example of image recognition performed by the imaging element 101.
Fig. 11 is a diagram explaining a third example of image recognition performed by the imaging element 101.
Fig. 12 is a diagram explaining a fourth example of image recognition performed by the imaging element 101.
Fig. 13 is a block diagram illustrating a configuration example of an embodiment of a computer to which the present technology is applied.

### MODE FOR CARRYING OUT THE INVENTION

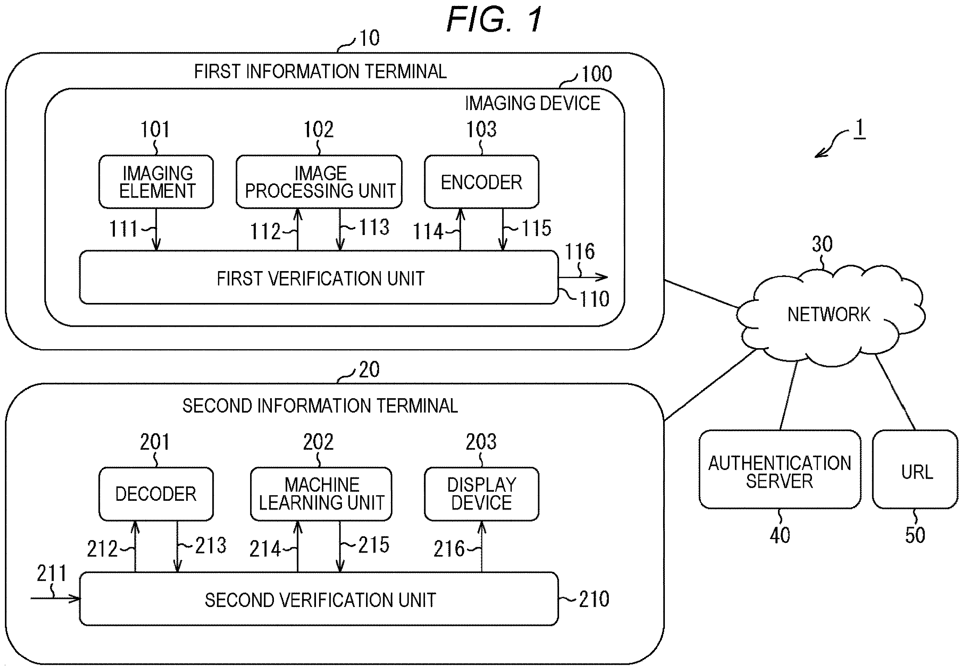

Fig. 1 illustrates a configuration example of an image data authentication system according to a first embodiment. An authentication system 1 includes a first information terminal 10, a second information terminal 20, a network 30, and an authentication server 40.

The first information terminal 10 includes an imaging device 100 capable of taking a photograph or a video, and can transmit image data captured by the imaging device 100 to the authentication server 40 via the network 30.

The authentication server 40 can generate authenticated image data on the basis of the image data transmitted from the first information terminal 10.

The second information terminal 20 can receive the authenticated image data from the authentication server 40 via the network 30. Alternatively, the authenticated image data is stored in a uniform resource locator (URL) 50 specified by the authentication server 40, and the second information terminal 20 can access the URL 50 to receive the authenticated image data.

The imaging device 100 includes an imaging element 101, an image processing unit 102, an encoder 103, and a first verification unit 110. The imaging element 101 can add a digital signature generated on the basis of, for example, a unique value such as a value of a physically unclonable function (PUF) or the like to data obtained by imaging, and output the data as image data (step 111).

The first verification unit 110 verifies the digital signature of the image data, and if it is determined to be normal, transmits the image data to the image processing unit 102 (step 112).

The image processing unit 102 performs image processing such as gamma correction and gain correction on the obtained image data to generate image data, and transmits the generated image data to the first verification unit 110 (step 113).

The first verification unit 110 verifies a digital signature of the image data, and if it is determined to be normal, transmits the image data to the encoder 103 (step 114).

The encoder 103 encodes the obtained image data, and transmits the image data to the first verification unit 110 (step 115).

The first verification unit 110 verifies a digital signature of the image data, and if it is determined to be normal, outputs the image data (step 116).

The authentication server 40 receives the image data via the network 30, and determines whether or not the image data is captured by using a specific application installed in the first information terminal 10. If it is determined that the image data is captured by using the specific application, the authentication server 40 generates authenticated image data on the basis of the image data.

The second information terminal 20 includes a decoder 201, a machine learning unit 202, a display device 203, and a second verification unit 210. The second verification unit 210 can receive the authenticated image data from the authentication server 40 via the network 30. Alternatively, the second verification unit 210 can receive, via the network 30, the authenticated image data stored in the URL 50 specified by the authentication server 40 (step 211).

The second verification unit 210 verifies a digital signature of the authenticated image data, and if it is determined to be normal, transmits the image data to the decoder 201 (step 212).

The decoder 201 decodes the obtained authenticated image data, and transmits the decoded authenticated image data to the second verification unit 210 (step 213).

The second verification unit 210 verifies a digital signature of the authenticated image data, and if it is determined to be normal, transmits the authenticated image data to the machine learning unit 202 (step 214).

The machine learning unit 202 performs recognition processing such as object recognition on the obtained authenticated image data, and transmits data based on the recognition processing to the second verification unit 210 (step 215).

The second verification unit 210 verifies a digital signature of the data based on the recognition processing, and if it is determined to be normal, transmits the data based on the recognition processing to the display device 203 (step 216) .

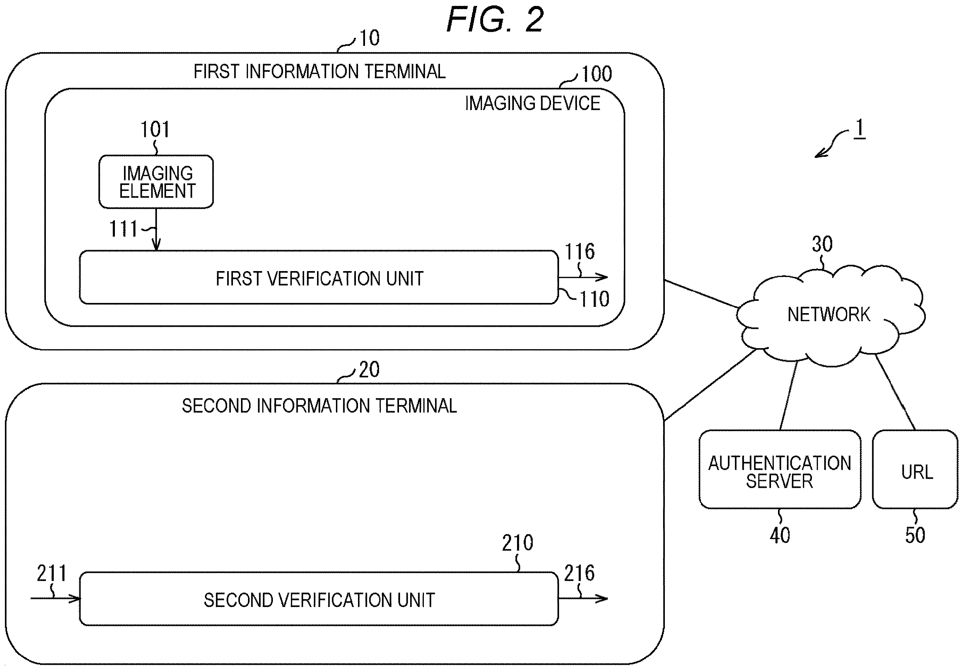

Fig. 2 illustrates a configuration example of an image data authentication system according to a second embodiment. The authentication system 1 includes the first information terminal 10, the second information terminal 20, the network 30, and the authentication server 40.

A difference from the first embodiment is that the image processing unit 102, the encoder 103, the decoder 201, the machine learning unit 202, and the display device 203 are not provided, and the image processing unit 102, the encoder 103, the decoder 201, the machine learning unit 202, and the display device 203 do not have to be provided as in the second embodiment depending on a service to be implemented.

The imaging element 101 can add a digital signature generated on the basis of, for example, a unique value such as a value of a PUF or the like to data obtained by imaging, and output the data as image data (step 111).

The first verification unit 110 verifies a digital signature of the image data, and if it is determined to be normal, outputs the image data (step 116).

The authentication server 40 receives the image data via the network 30, and determines whether or not the image data is captured by using a specific application installed in the first information terminal 10. If it is determined that the image data is captured by using the specific application, the authentication server 40 generates authenticated image data on the basis of the image data.

The second verification unit 210 can receive the authenticated image data from the authentication server 40 via the network 30. Alternatively, the second verification unit 210 can receive, via the network 30, the authenticated image data stored in the URL 50 specified by the authentication server 40 (step 211).

The second verification unit 210 verifies a digital signature of the authenticated image data, and if it is determined to be normal, outputs the authenticated image data (step 216).

Note that, as an embodiment different from the first embodiment and the second embodiment, for example, the imaging device 100 may include the imaging element 101, the image processing unit 102, and the first verification unit 110. Furthermore, the second information terminal 20 may include the decoder 201, the display device 203, and the second verification unit 210. Furthermore, it is sufficient if security is secured until authentication is given by the authentication server 40, and thus the second information terminal 20 does not have to include the second verification unit 210.

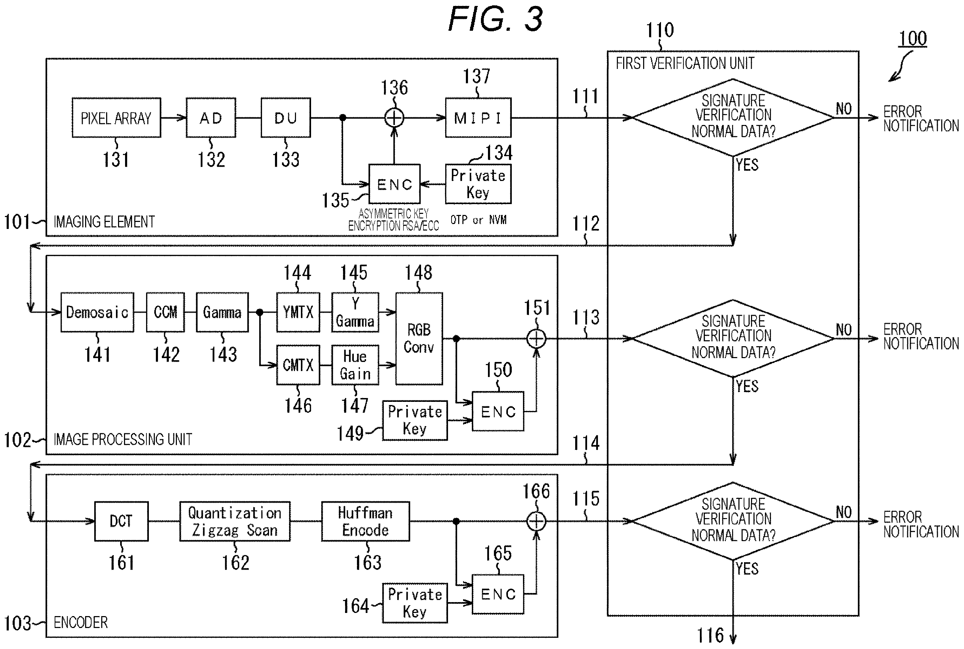

Fig. 3 illustrates in detail the imaging element 101, the image processing unit 102, the encoder 103, and the first verification unit 110 of the image data authentication system according to the first embodiment. Here, abbreviations in the figure are as follows.

AD: analog-to-digital conversion
DU: digital unit (digital signal processing part of a sensor)
ENC: encryption block (part to which a digital signature is added by using an encryption key)
Private Key: secret key (indicating a secret key for applying a digital signature)
CCM: colour correction matrix (color correction block)
MIPI: conversion processing into a signal conforming to a standard specified by mobile industry processor interface
Demosaic: demosaic
YMTX: Y matrix
CMTX: C matrix
Hue Gain: color adjustment block
DCT: discrete cosine transform
Quantization: quantization
Huffman Encode: Huffman encoding

As described above, in addition to output of only image data as performed in a conventional imaging element, in the imaging element according to the present disclosure, a digital signature generated in the imaging element is added and output, and in signal processing in the subsequent stage, authenticity proof is verified from the image data and the digital signature output in the preceding stage, and if the verification is successful, signal processing is performed on the image data, and the digital signature is added and transmitted to the subsequent block. Since it is possible to know whether or not the image data output by the imaging element has been subjected to unintended modification from a verification result, for example, in an application requiring authenticity proof, it is possible to know whether the image data is an image falsified (subjected to inappropriate image processing) or an image subjected to appropriate image processing, and a supplier that provides a service to a user through the application can use, in a desired application, only an image whose intent has not been modified, due to a chain of authenticity proof of image data. As a result, the supplier can prevent damage due to the falsified image. Furthermore, a service level using an image can be changed depending on a modification level of the image.

Here, for example, the digital signature output by each processing block includes information that is invariable even when signal processing is performed, such as output resolution information, and the processing itself performed in the processing block. The processing performed in the processing block refers to signal processing (scaling, cropping, rendering, swapping, and the like of image data) regarding modification of an image, and a digital signature is also added to information regarding the signal processing, whereby authenticity proof of the signal processing can be performed.

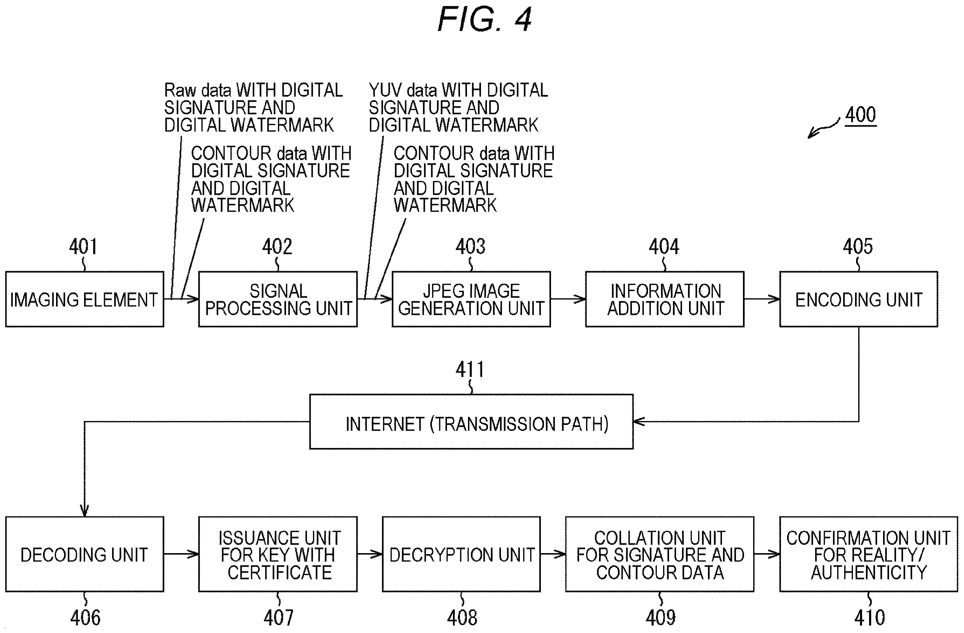

Fig. 4 illustrates a configuration example of an image data authentication system according to a third embodiment. An imaging element 401 is, for example, a stacked imaging element including a logic unit, and is configured to add a digital signature to captured image data (raw data) in the logic unit. Furthermore, the imaging element 401 may be configured to modify the raw data by using a digital watermarking technology of adding a watermark such as an invisible ruled line to the raw data, and add a digital signature thereto. In addition, separately from the generated raw data, data is also generated in which a contour of data generated in the imaging element and the same watermark data as that added to the raw data, and the like are recorded and a digital signature is added.

A signal output from the imaging element 401 is input to a signal processing unit 402. The signal processing unit 402 confirms a digital signature in a process of performing signal processing such as YUV conversion or point cloud conversion on input image data with the digital signature, and adds a digital signature again to the data subjected to the signal processing. Here, when authenticity proof is required, a public key with a certificate is issued, and confirmation of reality of the raw data, and confirmation of authenticity of YUV conversion data and point cloud conversion data are performed. In an authentication system 400, there may be a billing system that requires billing each time a public key with a certificate is issued.

A mechanism described above is utilized, and a service is provided for proving reality of a captured image and authenticity that data alteration is not made.

These authentication systems can be implemented in the following applications.
- A map forming application that acquires image data from a camera (including an imaging element) mounted on a vehicle, and continuously adds and updates a three-dimensional map.
- An application that secures evidence of an image captured by a surveillance camera, a smartphone, or the like.
- A dating (matching) application by which a user requires reliability of an image.
- An application that requires reality of image data necessary for authentication in payment or login.

Hereinafter, embodiments of the present technology will be described again.

### <First embodiment of authentication system to which present technology is applied>

Fig. 1 is a block diagram illustrating the configuration example of the first embodiment of the authentication system to which the present technology is applied.

In Fig. 1, the authentication system 1 includes the first information terminal 10, the second information terminal 20, the network 30, and the authentication server 40. The first information terminal 10, the second information terminal 20, and the authentication server 40 can communicate with each other via the network 30.

The first information terminal 10 is, for example, an information processing device such as a smartphone, a personal computer (PC), or a digital camera, and includes the imaging device 100 capable of capturing an image (data) such as a photograph or a video.

The first information terminal 10 can transmit an image captured by the imaging device 100 to the authentication server 40 via the network 30.

The imaging device 100 includes the imaging element 101, the image processing unit 102, the encoder 103, and the first verification unit 110.

The imaging element 101 is, for example, a complementary metal oxide semiconductor (CMOS) image sensor, and captures (images) an image by performing photoelectric conversion.

Furthermore, the imaging element 101 performs, on a captured image, processing such as image recognition using the image, embedding of a digital watermark in the image, extraction of a contour from the image, and the like, and as a result of the processing, it is possible to obtain an image recognition result, an image in which the digital watermark is embedded, (data of) the contour extracted from the image, and the like.

One or both of the image captured by the imaging element 101 and the result of processing an image obtained by performing processing on the captured image are referred to as image information.

The imaging element 101 generates an electronic signature of the image information, for example, a digital signature, adds the digital signature to the image information, and outputs the image information.

The image information (to which the digital signature is added) output by the imaging element 101 is supplied to the first verification unit 110.

Here, in the following, to simplify the description, it is assumed that the imaging element 101 outputs an image (to which a digital signature is added).

Note that, the imaging element 101 can output, in addition to an image, a processing result such as a recognition result of image recognition using the image, or the image and the processing result, with a digital signature of the image or digital signatures of the image and the processing result added. The image and the processing result can also be output with a digital signature of the whole of the image and the processing result added.

In the imaging element 101, a secret key used for generation of the digital signature of the image can be generated by using, as a seed, a value unique to the imaging element 101, for example, a value of a physically unclonable function (PUF) of the imaging element 101, or the like. By generating the secret key using the PUF of the imaging element 101, a highly reliable digital signature can be generated.

The image captured by the imaging element 101 is supplied from the first verification unit 110 to the image processing unit 102.

The image processing unit 102 processes the image from the first verification unit 110. The image processing unit 102 generates a digital signature of the result of processing the image, adds the digital signature to the result of processing the image, and outputs the result of processing the image.

For example, the image processing unit 102 performs image processing such as gamma correction and gain correction on the image from the first verification unit 110. The image processing unit 102 generates a digital signature of the image after the image processing, adds the digital signature to the image after the image processing, and outputs the image after the image processing.

The image (to which the digital signature is added) output by the image processing unit 102 is supplied to the first verification unit 110.

The image subjected to image processing by the image processing unit 102 is supplied from the first verification unit 110 to the encoder 103.

The encoder 103 processes the image from the first verification unit 110. The encoder 103 generates a digital signature of the result of processing the image, adds the digital signature to the result of processing the image, and outputs the result of processing the image.

For example, the encoder 103 encodes the image from the first verification unit 110. The encoder 103 generates a digital signature of the encoded image (coded data), adds the digital signature to the encoded image, and outputs the encoded image.

The image (to which the digital signature is added) output by the encoder 103 is supplied to the first verification unit 110.

Note that, the image captured by the imaging element 101 can be supplied from the first verification unit 110 to the encoder 103 instead of the image subjected to the image processing by the image processing unit 102. The encoder 103 can perform processing on the image captured by the imaging element 101.

The first verification unit 110 verifies the digital signature added to the image, for the image from the imaging element 101. In a case where verification of the digital signature of the image from the imaging element 101 is successful, the first verification unit 110 outputs the image to the image processing unit 102.

On the other hand, in a case where the verification of the digital signature of the image from the imaging element 101 fails, the first verification unit 110 performs notification of an error by outputting an error message without outputting the image.

The case where the verification of the digital signature of the image is successful is a case where a decryption result obtained by decrypting the digital signature with a public key paired with a secret key used to generate the digital signature matches a hash value of the image to which the digital signature is added. The case where the verification of the digital signature of the image fails is a case where the decryption result obtained by decrypting the digital signature does not match the hash value of the image to which the digital signature is added.

The first verification unit 110 verifies the digital signature added to the image, for the image from the image processing unit 102. In a case where verification of the digital signature of the image from the image processing unit 102 is successful, the first verification unit 110 outputs the image to the encoder 103.

On the other hand, in a case where the verification of the digital signature of the image from the image processing unit 102 fails, the first verification unit 110 performs notification of an error by outputting an error message without outputting the image.

The first verification unit 110 verifies the digital signature added to the image, for the image (coded data) from the encoder 103. In a case where verification of the digital signature of the image from the encoder 103 is successful, the first verification unit 110 outputs the image.

On the other hand, in a case where the verification of the digital signature of the image from the encoder 103 fails, the first verification unit 110 performs notification of an error by outputting an error message without outputting the image.

The image (coded data) from the encoder 103 output by the first verification unit 110 is transmitted to the network 30 in the first information terminal 10.

As described above, only in a case where the verification is successful of the digital signature of the image from each of the imaging element 101, the image processing unit 102, and the encoder 103, the first verification unit 110 outputs the image from each of them.

Thus, it is possible to prevent falsification of the image output by each of the imaging element 101, the image processing unit 102, and the encoder 103, and it is possible to prove and ensure authenticity that the image is not falsified (is authentic).

Moreover, it is possible to prove and ensure reality that the image output by each of the imaging element 101, the image processing unit 102, and the encoder 103 is an image that exists as a result of imaging actually performed by the imaging element 101.

The second information terminal 20 is, for example, an information processing device such as a smartphone or a PC, and can receive (download) an authenticated image from the authentication server 40 via the network 30.

Note that, the authentication server 40 can assign the URL 50 to the authenticated image, and in this case, the second information terminal 20 can access the URL 50 to receive the authenticated image.

The second information terminal 20 includes the decoder 201, the machine learning unit 202, the display device 203, and the second verification unit 210.

The authenticated image received by the second information terminal 20 is supplied from the second verification unit 210 to the decoder 201. The authenticated image is an image transmitted by the first information terminal 10 to the network 30, that is, an image after authentication in which an image (coded data) output from the encoder 103 is authenticated.

The decoder 201 processes the authenticated image from the second verification unit 210. The decoder 201 generates a digital signature of the result of processing the authenticated image, adds the digital signature to the result of processing the authenticated image, and outputs the result of processing the authenticated image.

For example, the decoder 201 decodes the authenticated image (coded data) from the second verification unit 210 in accordance with an encoding method of the encoder 103. The decoder 201 generates a digital signature of an image obtained by decoding, adds the digital signature to the image, and outputs the image.

The image (to which the digital signature is added) output by the decoder 201 is supplied to the second verification unit 210.

The image obtained by decoding in the decoder 201 is supplied from the second verification unit 210 to the machine learning unit 202.

The machine learning unit 202 processes the image from the second verification unit 210. The machine learning unit 202 generates a digital signature of the result of processing the image from the second verification unit 210, adds the digital signature to the result of processing the image, and outputs the result of processing the image.

For example, the machine learning unit 202 performs image recognition such as object recognition or person recognition on the image from the second verification unit 210 by using a model obtained by machine learning performed in advance. The machine learning unit 202 generates a digital signature of a recognition result of the image recognition, adds the digital signature to the recognition result of the image recognition, and outputs the recognition result.

The recognition result (to which the digital signature is added) output by the machine learning unit 202 is supplied to the second verification unit 210.

The recognition result obtained by image recognition by the machine learning unit 202 is supplied from the second verification unit 210 to the display device 203.

The display device 203 displays the recognition result from the second verification unit 210.

The authenticated image received by the second information terminal 20 is supplied to the second verification unit 210.

The second verification unit 210 verifies the digital signature added to the authenticated image, for the authenticated. In a case where verification of the digital signature of the authenticated image is successful, the second verification unit 210 outputs the authenticated image to the decoder 201.

On the other hand, in a case where the verification of the digital signature of the authenticated image fails, the second verification unit 210 performs notification of an error by outputting an error message without outputting the authenticated image.

The second verification unit 210 verifies the digital signature added to the image, for the image from the decoder 201. In a case where verification of the digital signature of the image from the decoder 201 is successful, the second verification unit 210 outputs the image to the machine learning unit 202.

On the other hand, in a case where the verification of the digital signature of the image from the decoder 201 fails, the second verification unit 210 performs notification of an error by outputting an error message without outputting the image.

For the recognition result from the machine learning unit 202, the second verification unit 210 verifies the digital signature added to the recognition result. In a case where verification of the digital signature of the recognition result from the machine learning unit 202 is successful, the second verification unit 210 outputs the recognition result.

On the other hand, in a case where the verification of the digital signature of the recognition result from the machine learning unit 202 fails, the second verification unit 210 performs notification of an error by outputting an error message without outputting the image.

The recognition result from the machine learning unit 202 output by the second verification unit 210 is supplied to the display device 203.

As described above, the second verification unit 210 outputs the authenticated image only in a case where the verification is successful of the digital signature of the authenticated image, that is, the processing result after authentication in which the processing result is authenticated that is obtained by processing, by the image processing unit 102 or the encoder 103, the image that exists as a result of imaging actually performed by the imaging element 101.

Moreover, only in a case where the verification is successful of the digital signatures of the image and the recognition result from each of the decoder 201 and the machine learning unit 202, the second verification unit 210 outputs the image and the recognition result from each of the decoder 201 and the machine learning unit 202.

Thus, it is possible to prevent falsification and prove and ensure authenticity and reality, for the authenticated image, and the image and the recognition result output by each of the decoder 201 and the machine learning unit 202.

The network 30 is, for example, a network appropriately including the Internet, a wired/wireless LAN, Bluetooth (registered trademark), near field communication (NFC), and the like.

The authentication server 40 receives the image (coded data) transmitted from the first information terminal 10 via the network 30.

The authentication server 40 (authentication unit) authenticates the image from the first information terminal 10, and stores the image as an authenticated image in a case where authentication is successful. The authentication server 40 can assign the URL 50 for the authenticated image.

On the other hand, in a case where authentication of the image from the first information terminal 10 fails, the authentication server 40 treats the image as, for example, an image for which the authentication fails or discards the image.

The authentication of the image in the authentication server 40 can be performed by verifying the electronic signature added to the image, and further, determining an application used for capturing the image as necessary.

In a case where verification of a digital certificate is successful, and further, if necessary, in a case where the application used for capturing the image is any of one or more specific applications set in advance, the authentication of the image can be successful.

The authentication server 40 can transmit the authenticated image to the second information terminal 20 in response to a request from the second information terminal 20.

Here, as the specific application, for example, a reliable application developed by a specific application vendor can be adopted.

In the first information terminal 10, information on the application used for capturing the image can be added to the image as metadata of the image in an exchangeable image file format (exif) format, for example. The authentication server 40 can determine the application used for capturing the image by using the information on the application added to the image.

In the authentication of the image in the authentication server 40, by determining the application used for capturing the image, it is possible to prevent an image captured by using an application that is not a specific application, for example, is not reliable, from being provided as an authenticated image.

As described above, by performing authentication in the authentication server 40, it is possible to prevent an image that is not actually captured by the imaging element 101 and has no reality, for example, an image generated by generative adversarial networks (GAN) or the like from being provided as an authenticated image.

In the authentication system 1 configured as described above, in the first information terminal 10, the imaging element 101 captures an image, adds a digital signature to the image, and outputs the image to the first verification unit 110 (step 111).

The first verification unit 110 verifies the digital signature of the image from the imaging element 101, and in a case where verification is successful, outputs the image from the imaging element 101 to the image processing unit 102 (step 112) .

The image processing unit 102 performs image processing on the image from the first verification unit 110, adds a digital signature to the image after the image processing, and outputs the image to the first verification unit 110 (step 113) .

The first verification unit 110 verifies the digital signature of the image from the image processing unit 102, and in a case where verification is successful, outputs the image from the image processing unit 102 to the encoder 103 (step 114) .

The encoder 103 encodes the image from the first verification unit 110, adds a digital signature to the encoded image (coded data), and outputs the encoded image to the first verification unit 110 (step 115).

The first verification unit 110 verifies the digital signature of the image from the encoder 103, and in a case where verification is successful, outputs the image from the encoder 103 (step 116).

In the first information terminal 10, the image output by the encoder 103 is transmitted to the authentication server 40 via the network 30.

The authentication server 40 receives and authenticates the image (coded data) from the first information terminal 10. In a case where the authentication of the image from the first information terminal 10 is successful, the authentication server 40 stores the image as an authenticated image.

For example, the authentication server 40 transmits the authenticated image to the second information terminal 20 in response to a request from the second information terminal 20.

In the second information terminal 20, the second verification unit 210 receives the authenticated image from the authentication server 40 (step 211).

The second verification unit 210 verifies the digital signature of the authenticated image, and in a case where verification is successful, outputs the authenticated image to the decoder 201 (step 212).

The decoder 201 decodes the authenticated image from the second verification unit 210, adds a digital signature to the image obtained by the decoding, and outputs the image to the second verification unit 210 (step 213).

The second verification unit 210 verifies the digital signature of the image from the decoder 201, and in a case where verification is successful, outputs the image to the machine learning unit 202 (step 214).

The machine learning unit 202 performs image recognition using the image data from the second verification unit 210, adds a digital signature to a recognition result of the image recognition, and outputs the recognition result to the second verification unit 210 (step 215).

The second verification unit 210 verifies the digital signature of the recognition result from the machine learning unit 202, and in a case where verification is successful, outputs the recognition result to the display device 203 (step 216) .

The display device 203 displays the recognition result from the second verification unit 210.

Note that, as a set of the secret key used for generation of the digital signature and the public key paired with the secret key, different sets can be used respectively in the imaging element 101, the image processing unit 102, the encoder 103, the decoder 201, and the machine learning unit 202.

However, as the set of the secret key and the public key, an identical set can be used in the imaging element 101, the image processing unit 102, and the encoder 103 constituting the first information terminal 10, and an identical set can be used in the decoder 201 and the machine learning unit 202 constituting the second information terminal 20.

Furthermore, as the set of the secret key and the public key, an identical set can be used in all of the imaging element 101, the image processing unit 102, the encoder 103, the decoder 201, and the machine learning unit 202.

The set of the secret key and the public key can be generated, for example, in a block that generates a digital signature. The public key can be registered in advance in the authentication server 40, for example. The digital signature can be verified by acquiring the public key registered in the authentication server 40 and using the public key.

### <Second embodiment of authentication system to which present technology is applied>

Fig. 2 is a block diagram illustrating the configuration example of the second embodiment of the authentication system to which the present technology is applied.

Note that, in the figure, portions corresponding to the case of Fig. 1 are denoted by the same reference numerals, and description thereof will be omitted below as appropriate.

In Fig. 2, the authentication system 1 includes the first information terminal 10, the second information terminal 20, the network 30, and the authentication server 40.

The first information terminal 10 includes the imaging device 100, and the imaging device 100 includes the imaging element 101 and the first verification unit 110.

The second information terminal 20 includes the second verification unit 210.

Thus, the authentication system 1 of Fig. 2 is common to the case of Fig. 1 in including the first information terminal 10, the second information terminal 20, the network 30, and the authentication server 40.

However, the authentication system 1 of Fig. 2 is different from the case of Fig. 1 in that the first information terminal 10 does not include the image processing unit 102 or the encoder 103, and the second information terminal 20 does not include the decoder 201, the machine learning unit 202, or the display device 203.

In the authentication system 1 configured as described above, in the first information terminal 10, the imaging element 101 captures an image, adds a digital signature to the image, and outputs the image to the first verification unit 110 (step 111).

The first verification unit 110 verifies the digital signature of the image from the imaging element 101, and in a case where verification is successful, outputs the image from the imaging element 101 (step 116).

In the first information terminal 10, the image output by the imaging element 101 is transmitted to the authentication server 40 via the network 30.

The authentication server 40 receives and authenticates the image from the first information terminal 10. In a case where the authentication of the image from the first information terminal 10 is successful, the authentication server 40 stores the image as an authenticated image.

For example, the authentication server 40 transmits the authenticated image to the second information terminal 20 in response to a request from the second information terminal 20.

In the second information terminal 20, the second verification unit 210 receives the authenticated image from the authentication server 40 (step 211).

The second verification unit 210 verifies the digital signature of the authenticated image, and in a case where verification is successful, outputs the authenticated image (step 216).

Note that, in Fig. 2, the imaging device 100 of the first information terminal 10 includes the imaging element 101 and the first verification unit 110, but besides, the imaging device 100 may also include, for example, the imaging element 101, the image processing unit 102, and the first verification unit 110, or may include the imaging element 101, the encoder 103, and the first verification unit 110.

Furthermore, in Fig. 2, the second information terminal 20 includes the second verification unit 210, but besides, the second information terminal 20 may also include, for example, any one or two of the decoder 201, the machine learning unit 202, and the display device 203, and the second verification unit 210.

Moreover, the second information terminal 20 may include no second verification unit 210, for example, may include one or more of the decoder 201, the machine learning unit 202, and the display device 203.

In the authentication system 1, in a case where the second information terminal 20 includes no second verification unit 210, a service provided by the authentication system 1 is up to integrity guarantee of the image (authenticated image) stored by the authentication server 40.

### <Configuration examples of imaging element 101, image processing unit 102, and encoder 103, and functions of first verification unit 110>

Fig. 3 is a diagram explaining configuration examples of the imaging element 101, the image processing unit 102, and the encoder 103, and functions of the first verification unit 110.

The imaging element 101 includes a pixel array 131, an analog to digital (AD) unit 132, a digital unit (DU) 133, a storage unit 134, an encryption (ENC) unit 135, an addition unit 136, and a mobile industry processor interface (MIPI) unit 137.

The pixel array 131 includes photoelectric conversion elements such as photo diodes (PDs) that perform photoelectric conversion, which are two-dimensionally arranged, for example, and photoelectrically converts light incident on the pixel array 131 and outputs a corresponding electric signal to the AD unit 132.

The AD unit 132 performs AD conversion of the electric signal from the pixel array 131 into a digital signal, and outputs an image (data) having the digital signal as a pixel value to the DU 133.

The DU 133 performs necessary digital signal processing on the image from the AD unit 132, and outputs the image to the ENC unit 135 and the addition unit 136.

The storage unit 134 is, for example, a nonvolatile storage unit such as a one time programmable read only memory (OTP ROM) or a non-volatile memory (NVM), and stores, for example, an encryption key (private key) of public key encryption (asymmetric key encryption) such as RSA or ECC.

The ENC unit 135 calculates a hash value of the image from the DU 133 and encrypts the hash value with a secret key stored in the storage unit 134 to generate a digital signature of the image from the DU 133. The ENC unit 135 outputs the digital signature to the addition unit 136.

The addition unit 136 adds the digital signature from the ENC unit 135 to the image from the DU 133 and outputs the image to the MIPI unit 137.

The MIPI unit 137 converts the image from the addition unit 136 into a format conforming to the MIPI standard and outputs the converted image. The image output by the MIPI unit 137 is output to the first verification unit 110.

The image processing unit 102 includes a demosaic unit 141, a colour correction matrix (CCM) unit 142, a gamma correction unit 143, a Y matrix (YMTX) unit 144, a Y gamma correction unit 145, a C matrix (CMTX) unit 146, a color adjustment unit 147, an RGB conversion unit 148, a storage unit 149, an ENC unit 150, and an addition unit 151.

The image output from the imaging element 101 is supplied from the first verification unit 110 to the demosaic unit 141.

The demosaic unit 141 performs demosaic processing on the image from the first verification unit 110, and outputs the image to the CCM unit 142.

The CCM unit 142 performs color correction on the image from the demosaic unit 141 and outputs the image to the gamma correction unit 143.

The gamma correction unit 143 performs gamma correction on the image from the CCM unit 142, and outputs the image to the YMTX unit 144 and the CMTX unit 146.

The image output by the gamma correction unit 143 is an RGB image, and the YMTX unit 144 extracts a luminance (Y) signal from the RGB image from the gamma correction unit 143 and outputs the Y signal to the Y gamma correction unit 145.

The Y gamma correction unit 145 performs gamma correction on the Y signal from the YMTX unit 144, and outputs the Y signal to the RGB conversion unit 148.

The CMTX unit 146 extracts a color difference (C) signal from the RGB image from the gamma correction unit 143, and outputs the C signal to the color adjustment unit 147.

The color adjustment unit 147 performs gain adjustment on the C signal from the CMTX unit 146, and outputs the signal to the RGB conversion unit 148.

The RGB conversion unit 148 converts the Y signal from the Y gamma correction unit 145 and the C signal from the color adjustment unit 147 into an RGB signal, and outputs an image having the RGB signal as a pixel value to the ENC unit 150 and the addition unit 151.

The storage unit 149 is configured similarly to the storage unit 134, and stores an encryption key.

The ENC unit 150 calculates a hash value of the image from the RGB conversion unit 148, and encrypts the hash value with a secret key stored in the storage unit 149 to generate a digital signature of the image from the RGB conversion unit 148. The ENC unit 150 outputs the digital signature to the addition unit 151.

The addition unit 151 adds the digital signature from the ENC unit 150 to the image from the RGB conversion unit 148, and outputs the image to the first verification unit 110.

The encoder 103 includes a discrete cosine transform (DCT) unit 161, a quantization unit 162, a Huffman encoding unit 163, a storage unit 164, an ENC unit 165, and an addition unit 166.

The image output by the image processing unit 102 from the first verification unit 110 is supplied from the first verification unit 110 to the DCT unit 161.

The DCT unit 161 performs DCT conversion on the image from the first verification unit 110, and outputs a DCT coefficient obtained by the DCT conversion to the quantization unit 162.

The quantization unit 162 performs zigzag scanning on the DCT coefficient from the DCT unit 161 to quantize the DCT coefficient, and outputs a quantization coefficient obtained by the quantization to the Huffman encoding unit 163.

The Huffman encoding unit 163 performs Huffman encoding on (a sequence of) the quantization coefficient from the quantization unit 162, and outputs coded data (coded image) obtained by the Huffman encoding to the ENC unit 165 and the addition unit 166.

The storage unit 164 is configured similarly to the storage unit 134, and stores an encryption key.

The ENC unit 165 calculates a hash value of the coded data from the Huffman encoding unit 163, and encrypts the hash value with a secret key stored in the storage unit 164 to generate a digital signature of the coded data. The ENC unit 165 outputs the digital signature to the addition unit 166.

The addition unit 166 adds the digital signature from the ENC unit 165 to the coded data from the Huffman encoding unit 163, and outputs the coded data to the first verification unit 110.

The first verification unit 110 verifies the digital signature added to the image, for the image from the imaging element 101. In a case where verification of the digital signature of the image from the imaging element 101 is successful, the first verification unit 110 outputs the image to the image processing unit 102, and in a case where the verification fails, the first verification unit 110 performs notification of an error.

The first verification unit 110 verifies the digital signature added to the image, for the image from the image processing unit 102. In a case where verification of the digital signature of the image from the image processing unit 102 is successful, the first verification unit 110 outputs the image to the encoder 103, and in a case where the verification fails, the first verification unit 110 performs notification of an error.

The first verification unit 110 verifies the digital signature added to the image, for the image (coded data) from the encoder 103. In a case where verification of the digital signature of the image from the encoder 103 is successful, the first verification unit 110 outputs the image, and in a case where the verification fails, the first verification unit 110 performs notification of an error.

As described above, in addition to outputting only an image as performed in a conventional imaging element, the imaging element 101 generates a digital signature of an image and output the digital signature in a form of being added to the image.

The first verification unit 110 verifies the digital signature of the image output by the imaging element 101 to confirm authenticity and reality of the image, and if verification is successful and the authenticity and reality are confirmed, outputs the image to the image processing unit 102 as a block in the subsequent stage.

In addition to processing of the image from the first verification unit 110, the image processing unit 102 generates a digital signature of the processed image and outputs the digital signature in a form of being added to the processed image.

Thereafter, processing is repeated as necessary for proving authenticity and the like such as verification of the digital signature added to the image, processing of the image, generation of the digital signature of the processed image, and addition of the digital signature to the processed image.

In the processing for proving authenticity and the like, it is possible to recognize whether or not an unintended modification has been performed on the image by verifying the digital signature added to the image.

For example, in an application of the second information terminal 20 or another device (not illustrated), in a case where processing is performed on an image output by the first information terminal 10 or an image (authenticated image) after authentication in which the image is authenticated, when it is necessary to prove authenticity of the image to be processed, it is possible to recognize whether the image to be processed is a falsified image (image subjected to inappropriate image processing) or an image subjected to appropriate image processing, by verifying the digital signature added to the image to be processed.

With a chain (links) of processing for proving authenticity or the like as described above, a supplier that provides a service to a user through an application can use only an image whose intention has not been modified in the application.

Since only the image whose intention has not been modified can be used in the application, the supplier can prevent damage due to use of the falsified image in the application.

For example, in a case where a supplier that provides a service of automobile damage insurance performs damage insurance payment depending on a damage situation of the automobile appearing in a photograph transmitted from the application, it is possible to prevent insurance money from being taken away by deception due to use of a falsified photograph.

Furthermore, a history of processing such as modification (editing) performed on the image can be added to the image together with a digital signature of processing information as necessary.

The processing on the image includes scaling, cropping, rendering, swapping, and the like of the image in addition to the processing performed by the image processing unit 102, the encoder 103, the decoder 201, and the machine learning unit 202.

In a case where the history of processing is added to the image together with the digital signature of the processing information, authenticity of the processing can be proved.

In a case where the history of processing is added to the image, it is possible to determine reliability that the image shows a state when captured by the imaging element 101 as it is depending on the history of processing, and to change a service or use of an image depending on the reliability.

For example, the reliability of an image that has not been modified is determined to be high, and the reliability of an image that has been modified is determined to be lower as a degree of modification is higher.

An image with high reliability can be used, for example, in news or as evidence of a criminal case. An image with low reliability can be used, for example, only in SNS.

In addition to adding the history of processing to the image as described above, in the imaging element 101, metadata such as the resolution (the number of pixels) of the image output by the imaging element 101 can be added to the image and output. Moreover, the imaging element 101 can generate a digital signature of metadata of an image, add the digital signature to the metadata, and output the metadata.

In a case where the metadata of the image is added to the image and output in the imaging element 101, even if various types of processing are performed on the image thereafter, information on the original image, for example, the resolution or the like of the image output by the imaging element 101 can be specified.

### <Third embodiment of authentication system to which present technology is applied>

Fig. 4 is a block diagram illustrating the configuration example of the third embodiment of the authentication system to which the present technology is applied.

In Fig. 4, the authentication system 400 includes the imaging element 401, the signal processing unit 402, a JPEG image generation unit 403, an information addition unit 404, an encoding unit 405, a decoding unit 406, an issuing unit 407, a decryption unit 408, a collation unit 409, and a confirmation unit 410.

The imaging element 401 is, for example, a stacked CMOS image sensor in which a sensor die and a logic die are stacked, the sensor die being a die on which a pixel array is formed, the logic die being a die on which a logic unit that performs various types of signal processing is formed.

In the imaging element 401, photoelectric conversion is performed in the sensor die, and RAW data of an image is generated. Moreover, in the imaging element 401, in the logic die, a digital signature of the RAW data of the image is generated, added to the RAW data of the image, and output.

In the logic die, necessary processing can be performed on the RAW data of the image.

For example, in the logic die, it is possible to embed a digital watermark such as an invisible ruled line in the RAW data of the image, and generate RAW data (hereinafter, also referred to as RAW data with a digital watermark) in which the digital watermark is embedded.

Furthermore, for example, in the logic die, it is possible to extract the contour of a subject appearing in the image from the RAW data of the image. Moreover, for example, in the logic die, it is possible to embed a digital watermark in the contour extracted from the RAW data of the image to generate a contour image in which the digital watermark is embedded.

The logic die can generate a digital signature of the RAW data with the digital watermark or the contour image (including the contour image in which the digital watermark is embedded), add the digital signature to the RAW data with the digital watermark or the contour image, and output the digital signature.

Note that, in the imaging element 401, it is possible to perform distance measurement by a stereo camera method, a time of flight (ToF) method, or the like. The contour image can be generated by using depth obtained by distance measurement.

The signal processing unit 402 performs signal processing of an image (RAW data of an image, RAW data with a digital watermark, and a contour image) output by the imaging element 401.

For example, the signal processing unit 402 performs, as signal processing, YUV conversion for converting RAW data or RAW data with a digital watermark of an image output by the imaging element 401 into YUV data.

The signal processing unit 402 generates a digital signature of the image after the signal processing, adds the digital signature to the image after the signal processing, and outputs the image after the signal processing.

Note that, the signal processing unit 402 verifies the digital signature added to the image output by the imaging element 401, and can perform signal processing on the image output by the imaging element 401 only in a case where verification is successful.

The JPEG image generation unit 403 outputs an image that cannot be subjected to JPEG encoding among images output by the signal processing unit 402, and JPEG encoding is performed on the image that can be subjected to JPEG encoding.

The JPEG image generation unit 403 generates a digital signature of a JPEG image as coded data obtained by JPEG encoding, adds the digital signature to the JPEG image, and outputs the image.

Note that, the JPEG image generation unit 403 can verify the digital signature added to the image output by the signal processing unit 402, and output only the image of which verification is successful and perform JPEG encoding.

The information addition unit 404 adds additional data to the image output by the JPEG image generation unit 403 as necessary, and outputs the image. As the additional data, for example, it is possible to adopt GPS data indicating a position, a time, and a posture of the imaging element 401 at the time of capturing an image output by the JPEG image generation unit 403, metadata such as time data, and gyro data, and the like.

In addition, the information addition unit 404 can add, for example, a history of processing performed on the image output by the imaging element 401, for example, a history of modification such as editing and encoding, to the image output by the JPEG image generation unit 403. The history of processing of modification and the like such as editing performed on the image can be written in a blockchain operated by a business operator that manages the history of image processing (processing on the image).

The encoding unit 405 performs lossless compression on the image output by the information addition unit 404 and outputs compressed data. The compressed data output by the encoding unit 405 is transmitted via a transmission path such as the Internet 411.

The decoding unit 406 receives the compressed data transmitted via the transmission path such as the Internet 411, decompresses the compressed data into an original image, and outputs the original image.

For example, in response to a request from a user or the like, the issuing unit 407 requests issuance of a public key certificate including a public key used for verification of a digital signature added to the image output by the decoding unit 406, and acquires the public key certificate.

The public key certificate can be issued from a certificate authority operated by the business operator that manages the history of processing the image. The certificate authority can perform billing in response to issuance of the public key certificate.

The issuing unit 407 verifies the public key certificate, and in a case where verification is successful, outputs the public key included in the public key certificate and the image output by the decoding unit 406.

The decryption unit 408 verifies the history of processing the image written in the blockchain operated by the business operator that manages a history of processing the image, and decrypts (restores) the history of processing the image from the blockchain.

The decryption unit 408 outputs the history of processing the image decrypted from the blockchain and a verification result thereof together with the public key and the image output by the issuing unit 407.

The collation unit 409 verifies the digital signature added to the image output by the decryption unit 408 by using the public key output by the decryption unit 408, and outputs a verification result thereof.

The collation unit 409 performs collation between the contour image and another image among images output by the decryption unit 408, and outputs a collation result thereof.

The collation unit 409 outputs the history of processing the image output by the decryption unit 408 and the verification result.

For example, in response to a request from a user or the like, the confirmation unit 410 uses an output of the collation unit 409 to determine (confirm) reality and authenticity of the image output by the decryption unit 408.

For example, verification of the digital signature added to the image output by the decryption unit 408 is successful, and in a case where it is recognized that an image matching the image output by the decryption unit 408 can be obtained by performing processing in accordance with the history of processing the image verified to have not been falsified, it can be determined that the image output by the decryption unit 408 has reality and authenticity.

On the other hand, in a case where the verification of the digital signature added to the image output by the decryption unit 408 fails or in a case where it is verified that the history of processing the image has been falsified, in a case where an image matching the image output by the decryption unit 408 cannot be obtained even if processing is performed in accordance with the history of processing the image verified to have not been falsified, it can be determined that the image output by the decryption unit 408 has no reality or authenticity.

In addition, for example, also in a case where the digital watermark of the image in which the digital watermark is embedded among the images output by the decryption unit 408 is falsified (including a case where there is no digital watermark), it can be determined that there is no reality or authenticity.

Furthermore, for example, even in a case where verification fails of a digital signature added to an image other than the contour image among the images output by the decryption unit 408, if it is recognized that the contour of (a subject appearing in) the image for which the verification of the digital signature fails has not been changed (falsified) from the history of processing the image and the result of collation with the contour image, it can be determined that there is reality and authenticity.

In this case, for example, even if the color tone of the image is changed, it is determined that there is reality and authenticity in a case where the contour is not changed.

Note that, in a case where the imaging element 401 outputs images captured from two or more different viewpoints, or in a case where an image captured from one viewpoint and a depth obtained by distance measurement are output, the signal processing unit 402 can convert the images captured from two or more viewpoints or the image captured from one viewpoint and the depth into three-dimensional (3D) data such as a colored point cloud, a set of 3D shape data and an image to be a texture, or the like. In a case where the set of the 3D shape data and the image to be the texture is adopted as the 3D data, the JPEG image generation unit 403 can perform JPEG encoding on the image to be the texture.

According to the authentication system 400 configured as described above, it is possible to provide a service for proving reality and authenticity of an image.

### <Fourth embodiment of authentication system to which present technology is applied>

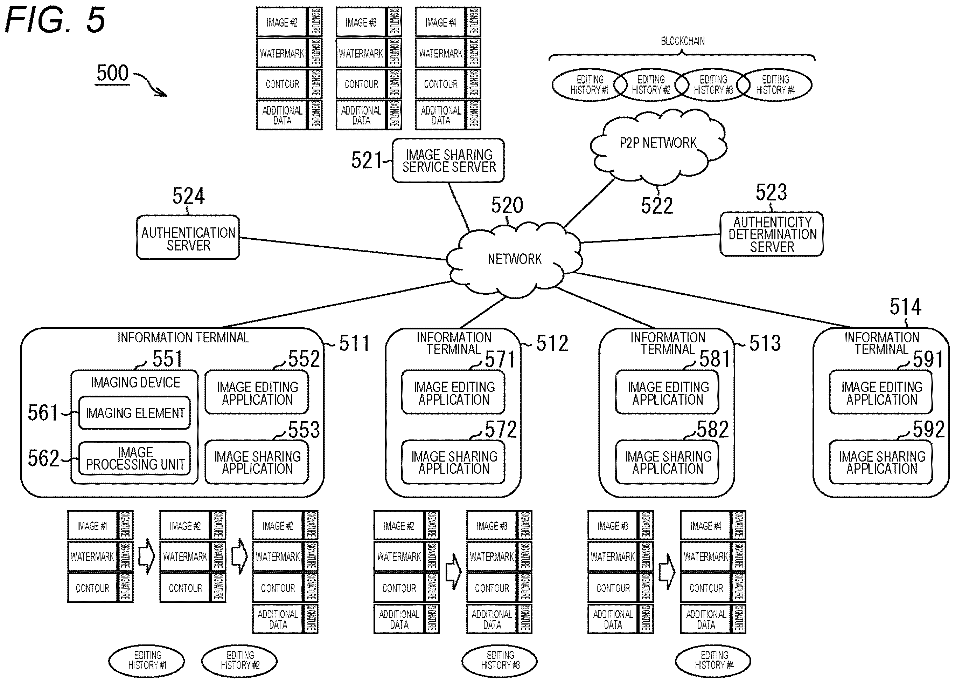

Fig. 5 is a block diagram illustrating a configuration example of a fourth embodiment of the authentication system to which the present technology is applied.

In Fig. 5, an authentication system 500 includes information terminals 511, 512, 513, and 514, a network 520, an image sharing service server 521, a point to point (P2P) network 522, an authenticity determination server 523, and an authentication server 524.

The information terminals 511, 512, 513, and 514, the image sharing service server 521, the P2P network 522, the authenticity determination server 523, and the authentication server 524 can communicate with each other via the network 520.

Note that, in the authentication system 500, an information terminal configured similarly to the information terminal 511 can be provided in addition to the information terminal 511.

Furthermore, in the authentication system 500, the information terminals 512 to 514 are similarly configured, but in addition to that three information terminals 512 to 514 are provided, one, two, or four or more information terminals can be provided, which are similarly configured to the information terminals 512 to 514.

Moreover, in the authentication system 500, it is possible to provide two or more each of the image sharing service servers 521, the P2P networks 522, the authenticity determination servers 523, and the authentication servers 524.

The information terminal 511 includes an imaging device 551, an image editing application 552, and an image sharing application 553.

The imaging device 551 captures and outputs an image.

The imaging device 551 includes an imaging element 561 and an image processing unit 562.

The imaging element 561 captures an image by performing photoelectric conversion, and generates RAW data of the image. The imaging element 561 generates a digital signature of the RAW data of the image, adds the digital signature to the RAW data of the image, and outputs the RAW data.

The imaging element 561 can generate an image (hereinafter, also referred to as a watermarked image) in which a digital watermark is embedded by embedding the digital watermark in the RAW data of the image, or can generate a contour image by extracting a contour from the RAW data of the image.

The imaging element 561 can generate digital signatures of the watermarked image and the contour image, add the digital signatures to the watermarked image and the contour image, respectively, and output the images.

The image processing unit 562 performs image processing on the image output by the imaging element 561.

For example, the image processing unit 562 performs necessary image processing such as gamma correction, gain correction, and YUV conversion of the image output by the imaging element 561.

The image processing unit 562 generates a digital signature of the image after the image processing, adds the digital signature to the image after the image processing, and outputs the digital signature together with the watermarked image and the contour image from the imaging element 561.

Note that, the image processing unit 562 verifies the digital signature added to the image of the RAW data output by the imaging element 561, and only in a case where verification is successful, can perform the image processing of the image output by the imaging element 561, generation of the digital signature of the image after the image processing, and output of the image after the image processing to which the digital signature is added, the watermarked image, and the contour image.

Furthermore, the image after the image processing by the image processing unit 562 (the image output by the imaging device 551) is hereinafter also referred to as an image #1.

In the information terminal 511, the image editing application 552 can edit the image #1 output by the imaging device 551, that is, the image #1 output by the image processing unit 562 in response to operation of the user of the information terminal 511. In Fig. 5, the image #1 is edited into an image #2.

Note that, the image editing application 552 verifies the digital signature of the image #1, and can perform editing of the image #1 and subsequent processing by the image editing application 552 only in a case where verification is successful.

When editing an image, the image editing application 552 stores an editing history as a history of processing the image. In Fig. 5, editing histories #1 and #2 are stored as editing histories of the image #1.

The image editing application 552 generates a digital signature of the edited image #2, adds the digital signature to the image #2, and outputs the digital signature together with the editing histories #1 and #2, the watermarked image, and the contour image.

For example, the image editing application 552 can set metadata or the like of the image #1 (material) that is an editing source as additional data and generate a digital signature of the additional data, add the digital signature to the additional data, and output the additional data.

The image sharing application 553 can access the image sharing service server 521 via the network 520 and receive an image sharing service such as an SNS.

The image sharing application 553 can upload, for example, an image to the image sharing service server 521 and disclose the image to an unspecified number of people or a specific person.

Furthermore, the image sharing application 553 can browse and download images disclosed on the image sharing service server 521.

For example, the image sharing application 553 uploads the image #2, the watermarked image, the contour image, and the additional data output by the image editing application 552 to the image sharing service server 521 in response to operation of the user of the information terminal 511.

In a case of outputting the image #2 to the outside of the information terminal 511, such as in a case of uploading the image #2, the image sharing application 553 causes the editing histories #1 and #2 corresponding to the image #2 to be written in a blockchain (posts a transaction).

That is, the image sharing application 553 accesses the P2P network 522 of the blockchain via the network 520, and requests writing of the editing histories #1 and #2 to the blockchain.

The P2P network 522 writes the editing histories #1 and #2 in the blockchain in response to a request from the image sharing application 553.

The information terminals 512 to 514 are configured similarly to the information terminal 511 except that the imaging device 551 is not included.

That is, the information terminal 512 includes an image editing application 571 and an image sharing application 572. The information terminal 513 includes an image editing application 581 and an image sharing application 582, and the information terminal 514 includes an image editing application 591 and an image sharing application 592.

The image editing applications 571, 581, and 591 are configured similarly to the image editing application 552. The image sharing applications 572, 582, and 592 are configured similarly to the image sharing application 553.

Thus, users of the respective information terminals 512 to 514 can edit images and receive an image sharing service by the image sharing service server 521.

In Fig. 5, in response to operation of the user of the information terminal 512, the image #2, the watermarked image, the contour image, and the additional data are downloaded from the image sharing service server 521 in the image sharing application 572, and the image #2 is edited to an image #3 in the image editing application 571.

Note that, the image editing application 571 verifies the digital signature of the image #2, and can perform editing of the image #2 and subsequent processing by the image editing application 571 only in a case where verification is successful. The same applies to the image editing applications 581 and 591.

The image editing application 571 stores an editing history #3 (editing history #3 corresponding to the image #3) of when the image #2 is edited to the image #3.

The image editing application 571 generates a digital signature of the edited image #3, adds the digital signature to the image #3, and outputs the digital signature together with the editing history #3, the watermarked image, and the contour image.

In Fig. 5, in the image sharing application 572 of the information terminal 512, the image #3, the watermarked image, the contour image, and the additional data output by the image editing application 571 are uploaded to the image sharing service server 521 in response to operation of the user of the information terminal 512.

In a case of outputting the image #3 to the outside of the information terminal 512, such as in a case of uploading the image #3, the image sharing application 572 causes the editing history #3 corresponding to the image #3 to be written in the blockchain, similarly to the image sharing application 553.

In Fig. 5, in response to operation of the user of the information terminal 513, the image #3, the watermarked image, the contour image, and the additional data are downloaded from the image sharing service server 521 in the image sharing application 582, and the image #3 is edited to an image #4 in the image editing application 581.

The image editing application 581 stores an editing history #4 (editing history #4 corresponding to the image #4) of when the image #3 is edited to the image #4.

The image editing application 581 generates a digital signature of the edited image #4, adds the digital signature to the image #4, and outputs the digital signature together with the editing history #4, the watermarked image, and the contour image.

In Fig. 5, in the image sharing application 582 of the information terminal 513, the image #4, the watermarked image, the contour image, and the additional data output by the image editing application 581 are uploaded to the image sharing service server 521 in response to operation of the user of the information terminal 513.

In a case of outputting the image #4 to the outside of the information terminal 513, such as in a case of uploading the image #4, the image sharing application 582 causes the editing history #4 corresponding to the image #4 to be written in the blockchain, similarly to the image sharing application 553.

In the information terminal 514, in response to operation of the user of the information terminal 514, the image sharing application 592 can access the image sharing service server 521 and provide the user with the images #2 to #4 disclosed on the image sharing service server 521 for browsing.

For example, when the user of the information terminal 514 operates the information terminal 514 to request determination of authenticity of the image #4 being browsed, the information terminal 514 transmits a request for determination of the authenticity of the image #4 to the authenticity determination server 523 via the network 520.

In response to the request for determination of the authenticity of the image #4, the authenticity determination server 523 requests and acquires (downloads) the image #4, the watermarked image, the contour image, and the additional data from the image sharing service server 521 via the network 520.

Moreover, in response to the request for determination of the authenticity of the image #4, the authenticity determination server 523 requests and acquires the blockchain in which the editing histories #1 to #4 related to the image #4 are written, from the P2P network 522 via the network 520.

Furthermore, in response to the request for determination of the authenticity of the image #4, the authenticity determination server 523 requests and acquires public keys (public key certificates) for verifying the respective digital signatures of the image #4, the watermarked image, the contour image, and the additional data from the authentication server 524 via the network 520.

The authentication server 524 manages the public keys paired with secret keys used for generation of the digital signatures, and transmits the public keys to the authenticity determination server 523 via the network 520 in response to a request from the authenticity determination server 523.

The authenticity determination server 523 verifies the digital signatures of the image #4, the watermarked image, the contour image, and the additional data from the image sharing service server 521 by using the public keys from the authentication server 524.

Furthermore, the authenticity determination server 523 verifies that the blockchain in which the editing histories #1 to #4 are written has not been falsified, and acquires the editing histories #1 to #4 from the blockchain.

The authenticity determination server 523 determines the authenticity (and the reality) of the image #4 depending on the verification result of the digital signature, the image #4, the watermarked image, the contour image, the editing histories #1 to #4, and the like, and transmits a determination result thereof to the information terminal 514 that has made the request for the authenticity determination via the network 520.

The information terminal 514 receives the determination result of the authenticity from the authenticity determination server 523, and presents (displays, for example) the determination result to the user.

In the determination of the authenticity in the authenticity determination server 523, it is possible to determine presence/absence of the authenticity and a degree of the authenticity (percentage of the authenticity).

For example, in a case where an image matching the image #4 for which verification of the digital signature is successful is obtained by performing editing in accordance with the editing histories #1 to #4 verified to have not been falsified, it can be determined that the image #4 has authenticity.

On the other hand, in a case where the verification of the digital signature fails or in a case where it is verified that any of the editing histories #1 to #4 has been falsified, in a case where an image matching the image #4 cannot be obtained even if editing is performed in accordance with the editing histories #1 to #4 verified to have not been falsified, it can be determined that the image #4 has no authenticity.

For example, in a case where the digital watermark of the watermarked image has been falsified (including a case where there is no digital watermark), it can be determined that there is no authenticity.

Furthermore, for example, in a case where the verification of the digital signature of the image #4 fails, but an image matching the image #4 is obtained by performing editing in accordance with the editing histories #1 to #4 verified to have not been falsified, or in a case where the contour image for which the verification of the digital signature is successful and the contour of the image #4 (substantially) match each other, in a case where the image #4 for which the verification of the digital signature is successful and the contour of the watermarked image match each other, a determination result of authenticity can be output indicating that there is a certain degree of authenticity.

In this case, for example, when the color tone is changed but the contour is not changed in the image #4, a determination result of authenticity is output indicating that there is a certain degree of authenticity.

Furthermore, for example, in a case where an information terminal that does not have a function of generating and adding a digital signature is connected to the network 520, and an image to which the digital signature is not added is uploaded to the image sharing service server 521 via the information terminal, determination of authenticity of the image to which the digital signature is not added can be performed depending on the editing history written in the blockchain for the image.

For example, in a case where an image to which a digital signature is not added is obtained by performing editing in accordance with the editing history verified to have not been falsified, a determination result of authenticity can be output indicating that there is a certain degree of authenticity.

### <Configuration examples of decoder 201 and machine learning unit 202, and functions of second verification unit 210>

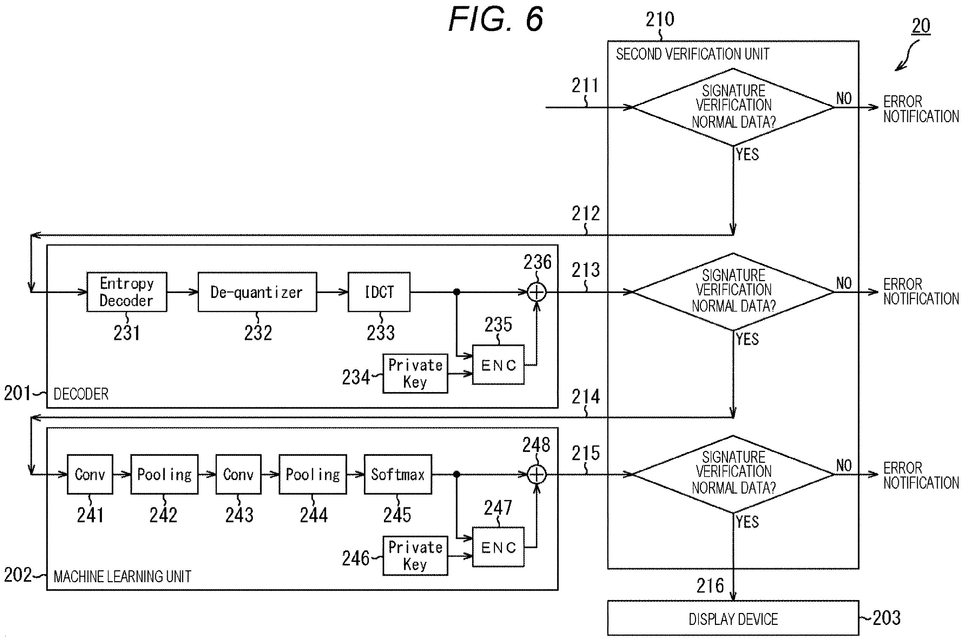

Fig. 6 is a diagram explaining configuration examples of the decoder 201 and the machine learning unit 202 in Fig. 1 and functions of the second verification unit 210.

The decoder 201 includes an entropy decoder 231, an inverse quantization unit 232, an IDCT unit 233, a storage unit 234, an ENC unit 235, and an addition unit 236.

The authenticated image (coded data) is supplied from the second verification unit 210 to the entropy decoder 231.

The entropy decoder 231 performs entropy decoding of the authenticated image, for example, decoding of a Huffman code, and outputs a quantization coefficient obtained by the decoding to the inverse quantization unit 232.

The inverse quantization unit 232 performs inverse quantization on the quantization coefficient from the entropy decoder 231 and outputs a DCT coefficient obtained by the inverse quantization to the IDCT unit 233.

The IDCT unit 233 performs inverse DCT conversion on the DCT coefficient supplied from the inverse quantization unit 232, and outputs an image (decoded image) obtained by the inverse DCT conversion to the ENC unit 235 and the addition unit 236.

The storage unit 234 is configured similarly to the storage unit 134 in Fig. 3, and stores an encryption key.

The ENC unit 235 calculates a hash value of the image from the IDCT unit 233, and encrypts the hash value with a secret key stored in the storage unit 234 to generate a digital signature of the image from the IDCT unit 233. The ENC unit 235 outputs the digital signature to the addition unit 236.

The addition unit 236 adds the digital signature from the ENC unit 235 to the image from the IDCT unit 233, and outputs the image to the second verification unit 210.

The machine learning unit 202 includes a convolution unit 241, a pooling unit 242, a convolution unit 243, a pooling unit 244, a softmax unit 245, a storage unit 246, an ENC unit 247, and an addition unit 248.

The image output from the decoder 201 is supplied from the second verification unit 210 to the convolution unit 241.

The convolution unit 241 performs a convolution operation using the image from the second verification unit 210 as an input, and outputs an operation result of the convolution operation to the pooling unit 242.

The pooling unit 242 performs pooling using the operation result from the convolution unit 241 as an input, and outputs a result of the pooling to the convolution unit 243.

The convolution unit 243 performs a convolution operation using the result of the pooling from the pooling unit 242 as an input, and outputs an operation result of the convolution operation to the pooling unit 244.

The pooling unit 244 performs pooling using the operation result from the convolution unit 243 as an input, and outputs a result of the pooling to the softmax unit 245.

The softmax unit 245 calculates a softmax function using the result of the pooling from the pooling unit 244 as an input, and outputs an operation result to the ENC unit 247 and the addition unit 248 as a recognition result of the image from the second verification unit 210.

The storage unit 246 is configured similarly to the storage unit 134, and stores an encryption key.

The ENC unit 247 calculates a hash value of the recognition result from the softmax unit 245, and encrypts the hash value with a secret key stored in the storage unit 246 to generate a digital signature of the recognition result from the softmax unit 245. The ENC unit 247 outputs the digital signature to the addition unit 248.

The addition unit 248 adds the digital signature from the ENC unit 247 to the recognition result from the softmax unit 245, and outputs the recognition result to the second verification unit 210.

For the authenticated image (coded data) from the authentication server 40, the second verification unit 210 verifies the digital signature added to the authenticated image. In a case where verification of the digital signature of the authenticated image from the authentication server 40 is successful, the second verification unit 210 outputs the authenticated image to the decoder 201, and in a case where the verification fails, the second verification unit 210 performs notification of an error.

The second verification unit 210 verifies the digital signature added to the image, for the image from the decoder 201. In a case where verification of the digital signature of the image from the decoder 201 is successful, the second verification unit 210 outputs the image to the machine learning unit 202, and in a case where the verification fails, the second verification unit 210 performs notification of an error.

For the recognition result from the machine learning unit 202, the second verification unit 210 verifies the digital signature added to the recognition result. In a case where verification of the digital signature of the recognition result from the machine learning unit 202 is successful, the second verification unit 210 outputs the recognition result to the display device 203, and in a case where the verification fails, the second verification unit 210 performs notification of an error.

As described above, in the second verification unit 210, the digital signature of the authenticated image is verified, and in a case where the verification is successful, the authenticated image is output.

The authenticated image is an image after authentication in which an image output from the imaging element 101 and processed by the image processing unit 102 and the encoder 103 (processing result) is authenticated by the authentication server 40.

Thus, for the image output by the second verification unit 210, authenticity and reality can be proved and ensured.

### <Fifth embodiment of authentication system to which present technology is applied>

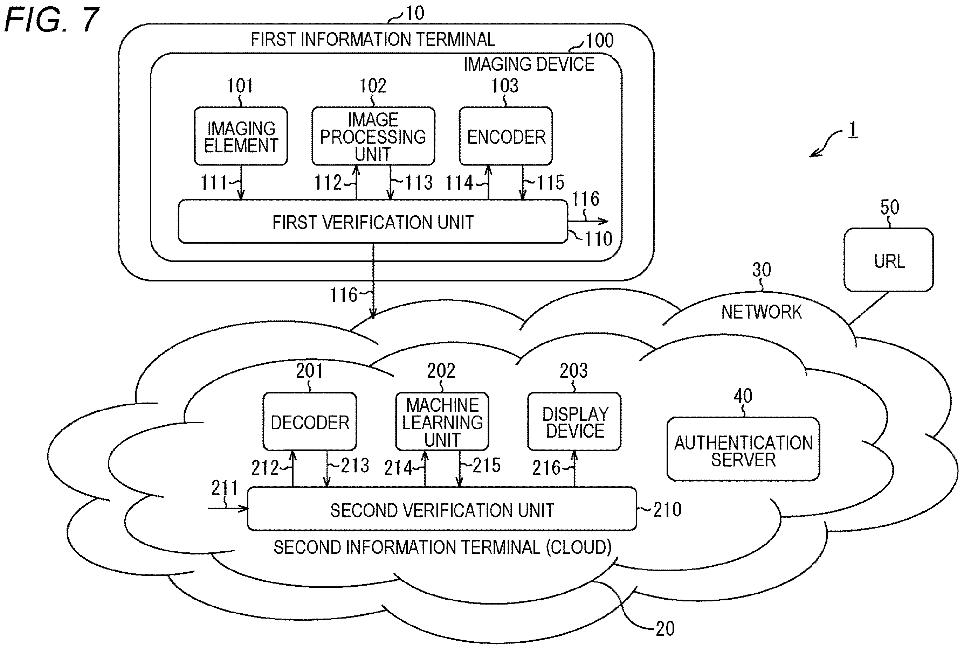

Fig. 7 is a block diagram illustrating a configuration example of a fifth embodiment of the authentication system to which the present technology is applied.

Note that, in the figure, portions corresponding to the case of Fig. 1 are denoted by the same reference numerals, and description thereof will be omitted below as appropriate.

In Fig. 7, the authentication system 1 includes the first information terminal 10, the second information terminal 20, the network 30, and the authentication server 40.

Thus, the authentication system 1 of Fig. 7 is configured similarly to the case of Fig. 1.

However, the authentication system 1 of Fig. 7 is different from the case of Fig. 1 in that the second information terminal 20 and the authentication server 40 are implemented by cloud computing on the network 30.

Moreover, the authentication system 1 of Fig. 7 is different from the case of Fig. 1 in that the authentication server 40 implemented by cloud computing is included in the second information terminal 20 implemented by cloud computing.

In Fig. 1, authentication is performed by the authentication server 40 outside the second information terminal 20, whereas in Fig. 7, the second information terminal 20 includes (the function of) the authentication server 40, and authentication is performed by the authentication server 40 included in the second information terminal 20.

Since the processing performed by the authentication system 1 of Fig. 7 is similar to that of Fig. 1, the description thereof will be omitted.

### <Image recognition performed by imaging element 101>

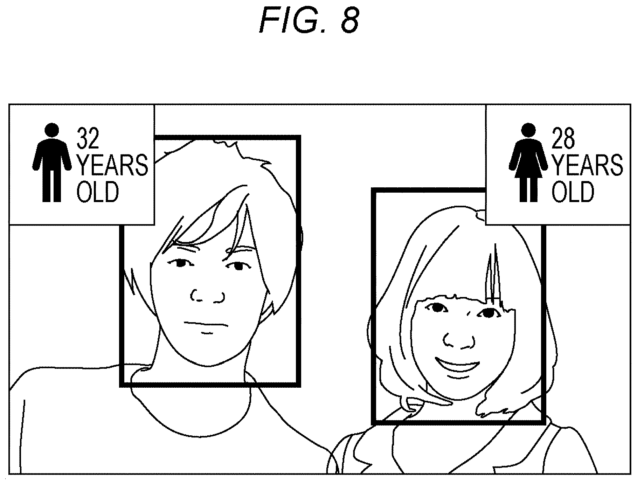

Fig. 8 is a diagram explaining a first example of image recognition performed by the imaging element 101.

As described with reference to Fig. 1, the imaging element 101 can perform, on a captured image, image recognition using the image, and output a recognition result of the image recognition together with a digital signature.

Fig. 8 illustrates the first example of image recognition performed by such an imaging element 101.

In Fig. 8, face recognition is performed as image recognition using an image captured by the imaging element 101, and information indicating a position of a face is output as a recognition result as indicated by a rectangle in the figure.

In the image recognition, in addition, attribute information of a person of the face recognized in the face recognition, for example, age (generation), gender, emotion, and the like can be recognized and output as a recognition result. Moreover, in face recognition as image recognition, a feature point of a recognized face can be detected, and feature point information regarding the feature point can be output.

In Fig. 8, (information indicating) the age and gender of the person of the face recognized by the face recognition is output as the recognition result.

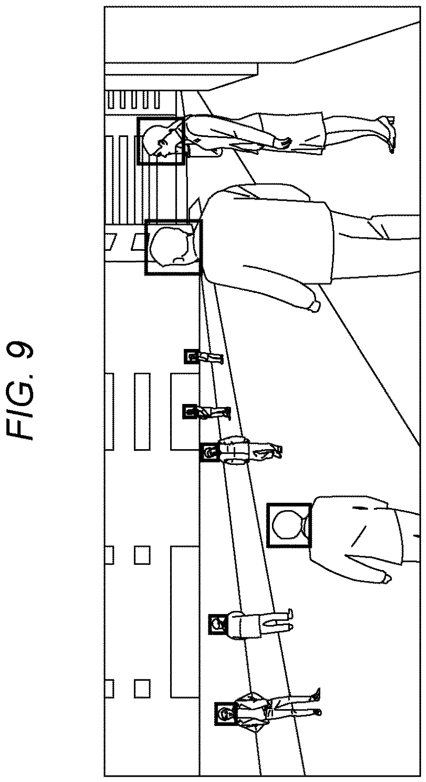

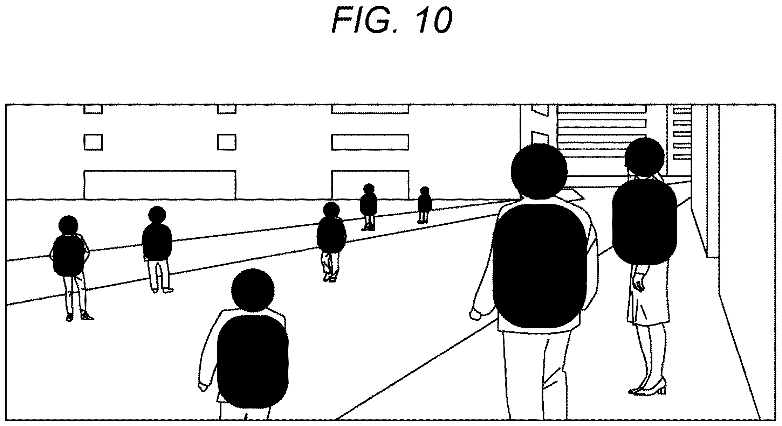

Figs. 9 and 10 are diagrams explaining a second example of image recognition performed by the imaging element 101.

In Figs. 9 and 10, person recognition is performed as image recognition using an image captured by the imaging element 101. Then, in Fig. 9, information indicating a position of a head of a person is output as a recognition result as indicated by a rectangle, and in Fig. 10, information indicating an upper body portion of a person is output as a recognition result as indicated by being filled in black.

According to the recognition results of Figs. 9 and 10, it is possible to grasp a place where persons are, a congestion situation, and the like.

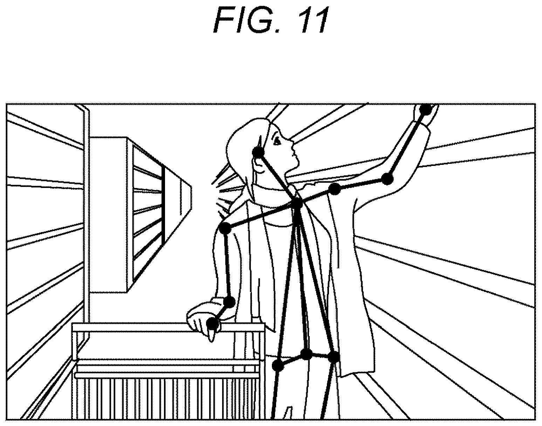

Fig. 11 is a diagram explaining a third example of image recognition performed by the imaging element 101.

In Fig. 11, recognition of a posture of a person is performed as image recognition using an image captured by the imaging element 101, and an image in which the posture of the person is expressed by points and lines is output as a recognition result.

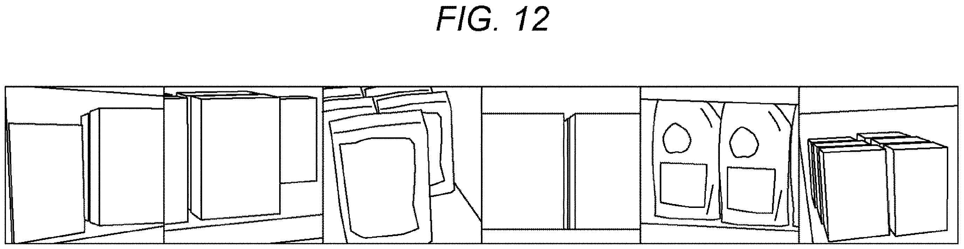

Fig. 12 is a diagram explaining a fourth example of image recognition performed by the imaging element 101.

In Fig. 12, an image in which a product shelf appears is captured by the imaging element 101, and object recognition is performed as image recognition using the image. Then, in Fig. 12, information on the objects placed on the product shelf and the number of the objects is output as a recognition result.

### <Description of computer to which the present technology is applied>

Next, a series of processing described above can be performed by hardware or software. In a case where the series of processing is performed by software, a program constituting the software is installed in a computer or the like.

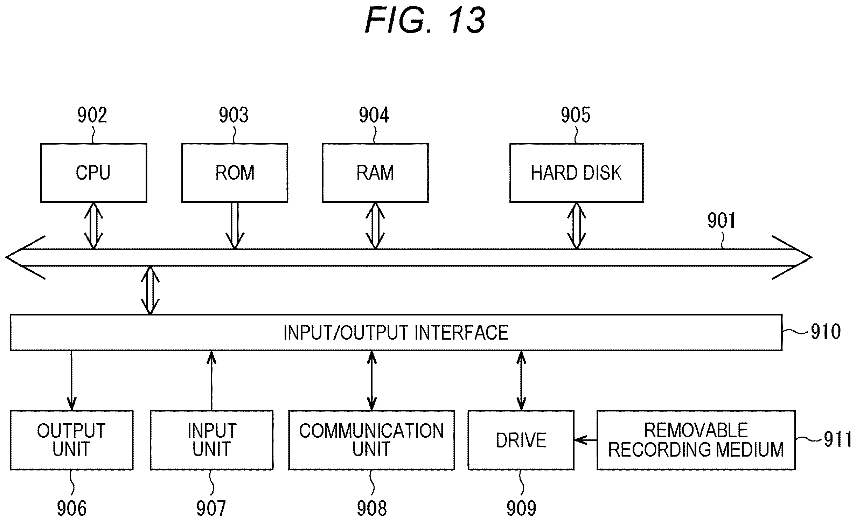

Fig. 13 is a block diagram illustrating a configuration example of an embodiment of a computer in which a program for executing the series of processing described above is installed.

The program can be recorded in advance on a hard disk 905 or a ROM 903 as a recording medium incorporated in the computer.

Alternatively, the program can be stored (recorded) in a removable recording medium 911 driven by a drive 909. Such a removable recording medium 911 can be provided as so-called packaged software. Here, examples of the removable recording medium 911 include a flexible disk, a Compact Disc Read Only Memory (CD-ROM), a Magneto Optical (MO) disk, a Digital Versatile Disc (DVD), a magnetic disk, a semiconductor memory, and the like.

Note that, the program can be installed on the computer from the removable recording medium 911 as described above, or can be downloaded to the computer via a communications network or a broadcast network and installed on the hard disk 905 incorporated. In other words, for example, the program can be wirelessly transferred from a download site to the computer via an artificial satellite for digital satellite broadcasting, or can be transmitted to the computer via a network such as a Local Area Network (LAN) or the Internet by wire.

The computer incorporates a Central Processing Unit (CPU) 902, and an input/output interface 910 is connected to the CPU 902 via a bus 901.

The CPU 902 executes the program stored in the Read Only Memory (ROM) 903 according to a command when the command is input by a user operating an input unit 907 or the like via the input/output interface 910. Alternatively, the CPU 902 loads the program stored in the hard disk 905 into a random access memory (RAM) 904 and executes the program.

The CPU 902 therefore performs the processing according to the above-described flowchart or the processing performed by the configuration of the above-described block diagram. Then, the CPU 902 causes the processing result to be output from an output unit 906 or transmitted from a communication unit 908 via the input/output interface 910 as necessary, and further, recorded on the hard disk 905, for example.

Note that, the input unit 907 includes a keyboard, a mouse, a microphone, and the like. Furthermore, the output unit 906 includes a Liquid Crystal Display (LCD), a speaker, and the like.

Here, in the present specification, the process performed by the computer in accordance with the program does not necessarily have to be performed chronologically in the order described as the flowchart. That is, the process performed by the computer in accordance with the program also includes processes executed in parallel or individually (for example, parallel process or process by an object).

Furthermore, the program may be processed by one computer (processor) or may be distributed and processed by a plurality of computers. Moreover, the program may be transferred to a remote computer and executed.

Moreover, in the present specification, a system means a set of a plurality of constituents (device, module (component), and the like), and it does not matter whether or not all of the constituents are in the same cabinet. Thus, a plurality of devices that is accommodated in a separate cabinet and connected to each other via a network and one device that accommodates a plurality of modules in one cabinet are both systems.

Note that, the embodiment of the present technology is not limited to the embodiments described above, and various modifications are possible without departing from the scope of the present technology.

For example, the present technology can adopt a configuration of cloud computing that shares one function in a plurality of devices via a network to perform processing in cooperation.

Furthermore, each step described in the above flowchart can be executed by sharing in a plurality of devices, other than being executed by one device.

Moreover, in a case where a plurality of pieces of processing is included in one step, the plurality of pieces of processing included in the one step can be executed by sharing in a plurality of devices, other than being executed by one device.

Furthermore, the advantageous effects described in the present specification are merely examples and are not limited to them, and other effects may be included.

Note that, the present technology can have the following configurations.

<1> An information processing device including
   a verification unit that performs:
   verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
   verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.
<2> The information processing device according to <1>, in which
   the imaging element performs image recognition using the image, and
   the result of processing the image is a recognition result of the image recognition.
<3> The information processing device according to <1> or <2>, in which
   the imaging element performs one or both of embedding of a digital watermark in the image and extraction of a contour from the image, and
   the result of processing the image is one or both of the image in which the digital watermark is embedded and the contour extracted from the image.
<4> The information processing device according to any of <1> to <3>, in which
   the imaging element outputs both the image and the result of processing the image.
<5> The information processing device according to any of <1> to <4>, further including
   the imaging element.
<6> The information processing device according to any of <1> to <5>, in which
   a secret key used for generation of the electronic signature of the image information and a secret key used for generation of the electronic signature of the result of processing the image information are different secret keys.
<7> The information processing device according to any of <1> to <5>, in which
   a secret key used for generation of the electronic signature of the image information and a secret key used for generation of the electronic signature of the result of processing the image information are an identical secret key.
<8> The information processing device according to any of <1> to <7>, in which
   a secret key used for generation of the electronic signature of the image information is generated by using a physically unclonable function (PUF).
<9> The information processing device according to any of <1> to <8>, in which
   a history of processing the image is caused to be written in a blockchain.
<10> An information processing method including:
   verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
   verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.
<11> A program for causing a computer to function as a verification unit that performs:
   verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
   verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.
<12> An information processing device including
   a verification unit: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.
<13> The information processing device according to <12>, in which
   the verification unit verifies the electronic signature of the image information or the result of processing the image information after authentication in which an external authentication unit authenticates the image information or the result of processing the image information.
<14> The information processing device according to <12>, further including
   an authentication unit that authenticates the image information or the result of processing the image information.
<15> The information processing device according to any of <12> to <14>, in which
   authentication of the image information or the result of processing the image information is performed by verification of the electronic signature of the image information or the result of processing the image information and determination of an application used for capturing the image.
<16> The information processing device according to any of <12> to <15>, in which
   the imaging element performs image recognition using the image, and
   the result of processing the image is a recognition result of the image recognition.
<17> The information processing device according to any of <12> to <16>, in which
   the imaging element performs one or both of embedding of a digital watermark in the image and extraction of a contour from the image, and
   the result of processing the image is one or both of the image in which the digital watermark is embedded and the contour extracted from the image.
<18> The information processing device according to any of <12> to <17>, in which
   the imaging element outputs both the image and the result of processing the image.
<19> The information processing method including:
   verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.
<20> A program for causing a computer to function as
   a verification unit: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.

### REFERENCE SIGNS LIST

- 1: Authentication system
- 10: First information terminal
- 20: Second information terminal
- 30: Network
- 40: Authentication server
- 100: Imaging device
- 101: Imaging element
- 102: Image processing unit
- 103: Encoder
- 110: First verification unit
- 201: Decoder
- 202: Machine learning unit
- 203: Display device
- 210: Second verification unit
- 131: Pixel array
- 132: AD unit
- 133: DU
- 134: Storage unit
- 135: ENC unit
- 136: Addition unit
- 137: MIPI unit
- 141: Demosaic unit
- 142: CCM unit
- 143: Gamma correction unit
- 144: YMTX unit
- 145: Y gamma correction unit
- 146: CMTX unit
- 147: Color adjustment unit
- 148: RGB conversion unit
- 149: Storage unit
- 150: ENC unit
- 151: Addition unit
- 161: DCT unit
- 162: Quantization unit
- 163: Huffman encoding unit
- 164: Storage unit
- 165: ENC unit
- 166: Addition unit
- 231: Entropy decoder
- 232: Inverse quantization unit
- 233: IDCT unit
- 234: Storage unit
- 235: ENC unit
- 236: Addition unit
- 241: Convolution unit
- 242: Pooling unit
- 243: Convolution unit
- 244: Pooling unit
- 245: Softmax unit
- 246: Storage unit
- 247: ENC unit
- 248: Addition unit
- 400: Authentication system
- 401: Imaging element
- 402: Signal processing unit
- 403: JPEG image generation unit
- 404: Information addition unit
- 405: Encoding unit
- 406: Decoding unit
- 407: Issuing unit
- 408: Decryption unit
- 409: Collation unit
- 410: Confirmation unit
- 411: Internet
- 500: Authentication system
- 511 to 514: Information terminal
- 520: Network
- 521: Image sharing service server
- 522: P2P network
- 523: Authenticity determination server
- 524: Authentication server
- 551: Imaging device
- 552: Image editing application
- 553: Image sharing application
- 561: Imaging element
- 562: Image processing unit
- 571: Image editing application
- 572: Image sharing application
- 581: Image editing application
- 582: Image sharing application
- 591: Image editing application
- 592: Image sharing application
- 901: Bus
- 902: CPU
- 903: ROM
- 904: RAM
- 905: Hard disk
- 906: Output unit
- 907: Input unit
- 908: Communication unit
- 909: Drive
- 910: Input/output interface
- 911: Removable recording medium

## Claims

1. An information processing device comprising
a verification unit that performs:
verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.

2. The information processing device according to claim 1, wherein
the imaging element performs image recognition using the image, and
the result of processing the image is a recognition result of the image recognition.

3. The information processing device according to claim 1, wherein
the imaging element performs one or both of embedding of a digital watermark in the image and extraction of a contour from the image, and
the result of processing the image is one or both of the image in which the digital watermark is embedded and the contour extracted from the image.

4. The information processing device according to claim 1, wherein
the imaging element outputs both the image and the result of processing the image.

5. The information processing device according to claim 1, further comprising
the imaging element.

6. The information processing device according to claim 1, wherein
a secret key used for generation of the electronic signature of the image information and a secret key used for generation of the electronic signature of the result of processing the image information are different secret keys.

7. The information processing device according to claim 1, wherein
a secret key used for generation of the electronic signature of the image information and a secret key used for generation of the electronic signature of the result of processing the image information are an identical secret key.

8. The information processing device according to claim 1, wherein
a secret key used for generation of the electronic signature of the image information is generated by using a physically unclonable function (PUF).

9. The information processing device according to claim 1, wherein
a history of processing the image is caused to be written in a blockchain.

10. An information processing method comprising:
verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.

11. A program for causing a computer to function as a verification unit that performs:
verifying an electronic signature of image information output from an imaging element that captures an image by performing photoelectric conversion and outputs the image or the image information that is a result of processing the image together with the electronic signature of the image information, and outputting the image information in a case where verification of the electronic signature of the image information is successful; and
verifying an electronic signature of a result of processing the image information output from a processing unit that processes the image information and outputs the result of processing the image information together with the electronic signature of the result of processing the image information, and outputting the result of processing the image information in a case where verification of the electronic signature of the result of processing the image information is successful.

12. An information processing device comprising
a verification unit: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.

13. The information processing device according to claim 12, wherein
the verification unit verifies the electronic signature of the image information or the result of processing the image information after authentication in which an external authentication unit authenticates the image information or the result of processing the image information.

14. The information processing device according to claim 12, further comprising
an authentication unit that authenticates the image information or the result of processing the image information.

15. The information processing device according to claim 12, wherein
authentication of the image information or the result of processing the image information is performed by verification of the electronic signature of the image information or the result of processing the image information and determination of an application used for capturing the image.

16. The information processing device according to claim 12, wherein
the imaging element performs image recognition using the image, and
the result of processing the image is a recognition result of the image recognition.

17. The information processing device according to claim 12, wherein
the imaging element performs one or both of embedding of a digital watermark in the image and extraction of a contour from the image, and
the result of processing the image is one or both of the image in which the digital watermark is embedded and the contour extracted from the image.

18. The information processing device according to claim 12, wherein
the imaging element outputs both the image and the result of processing the image.

19. The information processing method comprising:
verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.

20. A program for causing a computer to function as
a verification unit: verifying an electronic signature of image information or a result of processing the image information after authentication in which the image information or the result of processing the image information is authenticated, the image information or the result of processing the image information being output from an imaging element that captures an image by performing photoelectric conversion and outputs the image or the image information that is a result of processing the image together with the electronic signature of the image information; and outputting the image information or the result of processing the image information in a case where verification of the electronic signature is successful.
